# EUROPÄISCHE PATENTANMELDUNG

(11) **EP 4 307 510 A1**
(43) Veröffentlichungstag der Anmeldung: **17.01.2024**
(21) Anmeldenummer: 22184460.8
(22) Anmeldetag: 12.07.2022
(51) Int. Cl.: H02J 3/00, H02J 13/00

(54) **VERFAHREN UND SYSTEM ZUR FEHLERERKENNUNG EINES REGELBAREN ORTSNETZTRANSFORMATORS**

(71) Anmelder: Siemens Aktiengesellschaft, 80333 München (DE)
(72) Erfinder: Amthor, Arvid, 98631 Grabfeld OT Nordheim (DE); Metzger, Michael, 85570 Markt Schwaben (DE); Niessen, Stefan, 91056 Erlangen (DE); Schreck, Sebastian, 90439 Nürnberg (DE); Thiem, Sebastian, 91413 Neustadt an der Aisch (DE)
(74) Vertreter: Siemens Patent Attorneys

(57) **Zusammenfassung**

Es wird ein Verfahren zur Fehlererkennung eines regelbaren Ortsnetztransformators (1) vorgeschlagen, wobei ein oder mehrere Energiesysteme (4) am Ortsnetztransformator (1) über ein dreiphasiges Stromnetz (2) angeschlossen sind und jedes der Energiesysteme (4) eine Messeinrichtung (41) zur Erfassung der Spannung jeder Phase sowie eine Überwachungseinheit (42) zur Auswertung der erfassten Spannungen umfasst. Das Verfahren ist gekennzeichnet durch die folgenden Schritte:
- Erfassen der Spannung für jede der Phasen mittels der Messeinrichtung (41);
- Übermitteln der erfassten Spannungen an die Überwachungseinheit (42);
- Übermitteln einer Fehlermeldung bezüglich des Ortnetztransformators (1) an eine Netzregeleinheit (6) des Stromnetzes (2) durch die Überwachungseinheit (42), wenn innerhalb eines festgelegten Zeitbereiches eine zeitliche Unregelmäßigkeit von Spannungssprüngen oberhalb eines festgelegten Schwellenwertes durch die Überwachungseinheit (42) festgestellt wird.

Weiterhin betrifft die Erfindung ein System (10) zur Fehlererkennung eines regelbaren Ortsnetztransformators (1).

## Beschreibung

Die Erfindung betrifft ein Verfahren gemäß dem Oberbegriff des Patentanspruches 1 sowie ein System gemäß dem Oberbegriff des Patentanspruches 13.

An einem elektrischem Verteilnetz (Stromnetz) sind mehrere Anschlussteilnehmer (Energiesysteme) jeweils über einen Netzanschlusspunkt angeschlossen. Hierbei können die Energiesysteme unterhalb ihres Netzanschlusspunktes über eine oder mehrere energietechnische Anlagen zur Erzeugung, zum Verbrauch und/oder zur Speicherung von elektrischer Energie sowie Vorrichtungen zur Steuerung, Regelung und/oder Kommunikation (Edge Devices) aufweisen. Beispielsweise ist ein solches Energiesystem ein privater Haushalt mit einer Photovoltaikanlage und einem Batteriespeicher.

Zur Regelung des Stromnetzes umfasst dieses aktive Netzkomponenten, beispielsweise regelbare Ortsnetztransformatoren (rONT). Ein regelbarer Ortsnetztransformator kann sein Übersetzungsverhältnis ohne Unterbrechung der Spannung an der sekundärseitigen Sammelschiene in festgelegten Stufen einstellen. Dadurch können Spannungsprobleme auf der Unterspannungsseite behoben werden.

Geregelt wird die Stufung eines regelbaren Ortsnetztransformators von einer lokalen Regelung, welche unterspannungsseitig die Spannung an der Sammelschiene erfasst und basierend auf dem Zustand das Übersetzungsverhältnis des Transformators einstellt.

Fällt jedoch die Regelung eines regelbaren Ortsnetztransformators aus oder verhält sich diese nicht wie gewünscht, so bleibt dieses Fehlverhalten des Transformators bisher unentdeckt. Das ist deshalb der Fall, da insbesondere in Niederspannungsnetzen wenige Messstellen dauerhaft installiert sind.

Eine Folge eines derartigen unbemerkten Ausfalls der Traforegelung kann eine Verletzung des im Niederspannungsnetz zulässigen Spannungsbandes (nach EN 50160) sein. Dadurch könnten Schädigungen der angeschlossenen Geräte, wie beispielsweise Weiße Ware, Antriebe, Wärmepumpen und dergleichen, erfolgen.

Weiterhin weisen moderne Energiesysteme verschiedene Messgeräte, Steuergeräte und/oder Regelgeräte auf. Insbesondere Energiesysteme, die in einen lokalen Energiemarkt eingebunden sind, weisen typischerweise intelligente Geräte, beispielswiese sogenannte Edge Devices, für ihre Anbindung an die lokale Energiemarktplattform auf. Eine solche Energiemarktplattform ist beispielsweise aus dem Dokument EP 3518369 A1 bekannt.

Der vorliegenden Erfindung liegt die Aufgabe zugrunde, ein Verfahren und ein System zur Fehlererkennung eines regelbaren Ortsnetztransformators bereitzustellen, welches insbesondere die durch einen lokalen Energiemarkt vorhandene Infrastruktur nutzt.

Die Aufgabe wird durch ein Verfahren mit den Merkmalen des unabhängigen Patentanspruches 1 sowie durch ein System mit den Merkmalen des unabhängigen Patentanspruches 13 gelöst. In den abhängigen Patentansprüchen sind vorteilhafte Ausgestaltungen und Weiterbildungen der Erfindung angegeben.

Das erfindungsgemäße Verfahren zur Fehlererkennung eines regelbaren Ortsnetztransformators, wobei ein oder mehrere Energiesysteme am Ortsnetztransformator über ein dreiphasiges Stromnetz angeschlossen sind, und jedes der Energiesysteme eine Messeinrichtung zur Erfassung der Spannung jeder Phase sowie eine Überwachungseinheit zur Auswertung der erfassten Spannungen umfasst, ist wenigstens gekennzeichnet durch die folgenden Schritte:
- Erfassen der Spannung für jede der Phasen mittels der Messeinrichtung;
- Übermitteln der erfassten Spannungen an die Überwachungseinheit;
- Übermitteln einer Fehlermeldung bezüglich des Ortnetztransformators an eine Netzregeleinheit des Stromnetzes durch die Überwachungseinheit, wenn innerhalb eines festgelegten Zeitbereiches eine zeitliche Unregelmäßigkeit von Spannungssprüngen oberhalb eines Schwellenwertes durch die Überwachungseinheit festgestellt wird.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Beispielsweise ist die Überwachungseinheit zur Analyse der erfassten Spannungen als Rechenvorrichtung ausgebildet.

Aus struktureller Sicht definiert, insbesondere der IPCC Fifth Assessment Report, ein Energiesystem als: "Alle Komponenten, die sich auf die Erzeugung, Umwandlung, Lieferung und Nutzung von Energie beziehen" (Annex I, Seite 1261).

Energiesysteme umfassen typischerweise mehrere Komponenten, insbesondere energietechnische Anlagen, beispielsweise Energiewandlungsanlagen, Verbrauchsanlagen und/oder Speicheranlagen. Hierbei können Energiesysteme mehrere Energieformen erzeugen und/oder bereitstellen (multimodale Energiesysteme). Insbesondere stellt ein solches Energiesystem für einen Verbraucher, beispielsweise ein Gebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung, ihrer Bereitstellung und/oder ihrer Speicherung gekoppelt. Energiesysteme sind beispielsweise Gebäude, insbesondere Wohngebäude und/oder Bürogebäude und/oder industrielle Anlagen.

Als energietechnische Anlagen kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Energiespeicher, insbesondere Batteriespeicher, Biomasseanlagen, Biogasanlagen, Müllverbrennungsanlagen, industrielle Anlagen, konventionelle Kraftwerke und/oder dergleichen.

In einem ersten Schritt des erfindungsgemäßen Verfahrens wird die Spannung jeder Phase mittels der Messeinrichtung erfasst. Hierbei kann das Erfassen kontinuierlich oder gemäß festgelegter Zeitschritte erfolgen. Es wird somit bevorzugt eine aktuelle Spannung jeder Phase erfasst, die beispielsweise jede Minute durch die Messeinrichtung erfasst wird. Hierbei kann die Messeinrichtung durch ein Edge Device umfasst sein oder als Edge Device ausgebildet sein. Die erfassten Spannungen liegen typischerweise als Messdaten, beispielsweise in Form einer Zeitreihe, vor.

In einem zweiten Schritt des erfindungsgemäßen Verfahrens übermittelt die Messeinrichtung die erfasste Spannung beziehungsweise Spannungen an die Überwachungseinheit. Hierbei kann die Messeinrichtung die Messdaten unmittelbar oder mittelbar, beispielsweise durch und/oder über weitere Komponenten, die Spannungen in Form von Messdaten an die Überwachungseinheit übermitteln.

In einem dritten Schritt des erfindungsgemäßen Verfahrens werden die Messdaten beziehungsweise die Messwerte bezüglich der Spannungen durch die Überwachungseinheit analysiert. Hierbei werden erfindungsgemäß die Spannungssprünge analysiert. Es ist ein Grundgedanke der vorliegenden Erfindung, dass die durch die Regelung des Ortsnetztransformators erfolgten Spannungssprünge ebenfalls unterspannungsseitig messbar sind. Zur Datenanalyse der erfassten Spannungen kann die Überwachungseinheit ein computergestütztes Analyse-Softwaremodul umfassen. Hierbei erfolgt die Analyse durch die Überwachungseinheit erfindungsgemäß derart, dass geprüft wird, ob innerhalb eines festgelegten Zeitbereiches eine zeitliche Unregelmäßigkeit von Spannungssprüngen oberhalb eines festgelegten Schwellenwertes vorliegt. Liegt eine solche zeitliche Unregelmäßigkeit vor, beispielsweise eine zeitliche Häufung von Spannungssprüngen, dann übermittelt die Überwachungseinheit eine Fehlermeldung an eine Netzregeleinheit des Stromnetzes. Hierbei kann das Übermitteln der Fehlermeldung unmittelbar oder mittelbar, beispielsweise durch und/oder über weitere Komponenten, erfolgen.

Es ist somit ein weiterer Grundgedanke der vorliegenden Erfindung, dass ein Fehler beziehungsweise ein Fehlverhalten des Transformators durch eine zeitliche Unregelmäßigkeit von Spannungssprüngen oberhalb des Schwellenwertes erkannt werden kann.

Eine Fehlermeldung im Sinne der vorliegenden Erfindung kann jeder Datensatz und/oder jedes Signal sein, welches für die Netzregeleinheit die Information umfasst, dass ein Fehler des Ortnetztransformators erkannt wurde.

Gemäß der vorliegenden Erfindung werden somit die Spannungssprünge, die durch die Regelung des Ortsnetztransformators auftreten, gemäß ihrer zeitlichen Regelmäßigkeit analysiert.

Durch die vorliegende Erfindung ist es somit möglich ein Fehlverhalten des Ortsnetztransformators beziehungsweise seiner Regelung zu erkennen. Dadurch kann vorteilhafterweise ein Schaden von elektrischen Anlagen, Komponenten und/oder Geräten der Energiesysteme reduziert oder vermieden werden.

Weiterhin ist durch die Fehlermeldung die Netzregeleinheit vorteilhafterweise in Kenntnis über das Fehlverhalten des Transformators, sodass geeignete Maßnahmen zum Beheben des Fehlers durch diese getroffen werden können. Beispielsweise können passende Ersatzteile beschafft werden. Somit sind zusätzliche Wartungseinsätze zum Diagnostizieren des Schadens nicht erforderlich.

Weiterhin können zusätzliche Sensoren innerhalb des Stromnetzes zur Erfassung von Fehlern eingespart werden, da die innerhalb der Energiesysteme bereits vorhandenen Komponenten verwendet werden. Dies ist insbesondere dann möglich, wenn die Energiesysteme in einen lokalen Energiemarkt eingebunden sind. Somit ist keine weitere oder zusätzliche Infrastruktur erforderlich. Dadurch kann seitens des Netzbetreibers redundante Hardware und Software eingespart werden, was zu einer größeren Nachhaltigkeit führt.

Das erfindungsgemäße System zur Fehlererkennung eines regelbaren Ortsnetztransformators, umfasst einen oder mehrere am Ortsnetztransformator über ein dreiphasiges Stromnetz angeschlossene Energiesysteme, wobei jedes der Energiesysteme eine Messeinrichtung zur Erfassung der Spannung jeder Phase sowie eine Überwachungseinheit zur Auswertung der erfassten Spannungen umfasst. Das erfindungsgemäße System ist dadurch gekennzeichnet, dass:
- die Messeinrichtung zur Erfassung der Spannung für jede der Phasen ausgebildet ist;
- die Messeinrichtung zur Übermittlung der erfassten Spannungen an die Überwachungseinheit ausgebildet ist; und
- die Überwachungseinheit dazu ausgebildet ist, eine Fehlermeldung bezüglich des Ortnetztransformators an eine Netzregeleinheit des Stromnetzes zu übermitteln, wenn innerhalb eines festgelegten Zeitbereiches eine zeitliche Unregelmäßigkeit von Spannungssprüngen oberhalb eines Schwellenwertes durch die Überwachungseinheit festgestellt wird.

Es ergeben sich zum erfindungsgemäßen Verfahren gleichartige, gleichwertige und gleichwirkende Vorteile und/oder Ausgestaltungen des erfindungsgemäßen Systems.

Alternativ und/oder ergänzend kann die Überwachungseinheit für mehrere Energiesysteme zentral ausgestaltet sein, das heißt für eine oder mehrere Energiesysteme umfasst die Vorrichtung eine zentrale Überwachungseinheit. Dadurch umfassen diese Energiesysteme die Überwachungseinheit nicht, sondern weisen Kommunikationseinheiten (Edge Devices) mit dieser zentralen Überwachungseinheit auf.

Gemäß einer vorteilhaften Ausgestaltung der Erfindung wird die Fehlermeldung durch die Überwachungseinheit an die Netzregeleinheit übermittelt, wenn eine zeitliche Häufung der Spannungssprünge durch die Überwachungseinheit festgestellt wird.

Mit anderen Worten liegt eine zeitliche Unregelmäßigkeit in Form einer Häufung von Stelleingriffen der Transformatorregelung vor. Ob ein Stelleingriff oder eine normale Spannungsschwankung vorliegt, ist durch den Schwellenwert für die Spannungssprünge festgelegt. Tritt eine solche zeitliche Häufung der Stelleingriffe des Transformators und der dadurch erzeugten Spannungssprünge auf, so liegt mit ausreichender Wahrscheinlichkeit ein Fehler des Transformators vor. Vorteilhafterweise kann durch ein Feststellen einer solchen zeitlichen Häufung der Fehler beziehungsweise das Fehlverhalten erkannt werden. Das ist deshalb der Fall, da die Stelleingriffe typischerweise zeitlich nicht gehäuft erfolgen. Eine zeitliche Häufung liegt beispielsweise dann vor, wenn mehr als 10 Stelleingriffe innerhalb von 10 Minute auftreten, das heißt in etwa eine Minute Verzögerung pro Stelleingriff. Allerdings sind die genannten Werte nur beispielhaft, da typischerweise eine Transformatorregelung diesbezüglich parametrisierbar ist. Ein Zeitbereich von einer Minute ist jedoch vorteilhaft.

In einer vorteilhaften Weiterbildung der Erfindung wird die Fehlermeldung durch die Überwachungseinheit an die Netzregeleinheit übermittelt, wenn eine invertierte Wirkrichtung von Spannungssprüngen durch die Überwachungseinheit festgestellt wird.

Mit anderen Worten liegt ebenfalls ein Fehlverhalten vor, wenn die Spannungssprünge beziehungsweise die Stelleingriffe gerade invertiert bezüglich ihrer Wirkleistung erfolgen. Dies kann vorteilhafterweise durch die Überwachungseinheit durch ihre Analyse/Datenanalyse festgestellt werden.

Gemäß einer vorteilhaften Ausgestaltung der Erfindung erfolgt das Übermitteln der Fehlermeldung nur dann, wenn zusätzlich ein zulässiges Spannungsband durch die erfassten Spannungen verletzt ist.

Mit anderen Worten wird zusätzlich durch die Überwachungseinheit geprüft, ob ebenfalls das zulässige Spannungsband verletzt ist. Somit sind die Bedingungen für das Übermitteln der Fehlermeldung dadurch festgelegt, dass erstens eine zeitliche Unregelmäßigkeit von Spannungssprüngen oberhalb des Schwellenwertes vorliegt und dass zweitens das Spannungsband verletzt ist. Dadurch wird vorteilhafterweise die Wahrscheinlichkeit, dass es sich tatsächlich um einen Fehler der Regelung handelt, erhöht.

Hierbei ist bevorzugt das zulässige Spannungsband durch den Spannungsbereich von 207 Volt bis 253 Volt festgelegt.

Dies entspricht dem Niederspannungsbereich in Deutschland.

Vorteilhafterweise wird das Spannungsband durch ±10 Prozent eines Spannungssollwertes definiert.

In einer vorteilhaften Weiterbildung der Erfindung wird zusätzlich eine Fehlerbeschreibung bezüglich der Fehlermeldung durch die Überwachungseinheit an die Netzregeleinheit übermittelt.

Vorteilhafterweise wird dadurch die Netzregeleinheit über die Art des Fehlers informiert. Dadurch können geeignetere und gezieltere Maßnahmen zur Fehlerbehebung durch die Netzregeleinheit getroffen werden.

Gemäß einer vorteilhaften Ausgestaltung der Erfindung wird basierend auf der Fehlermeldung eine Reparatur und/oder eine Wartung des Ortsnetztransformators durchgeführt.

Hierbei wird die Reparatur und/oder die Wartung durch die Netzregeleinheit eingeleitet. Die Reparatur und/oder die Wartung kann zusätzlich auf der übermittelten Fehlerbeschreibung basieren.

In einer vorteilhaften Weiterbildung der Erfindung ist die Messeinrichtung weiterhin zur Erfassung der Wirkleistung und/oder Blindleistung jeder Phase ausgebildet.

Dadurch werden vorteilhafterweise weitere für den Netzzustand des Stromnetzes wichtige Größen erfasst. Insbesondere wird zusätzlich zur Spannung der Strom am Netzanschlusspunkt erfasst. Die genannten weiteren Daten können wiederum, beispielsweise durch die Überwachungseinheit, an die Netzregeleinheit übermittelt werden. Dadurch kann vorteilhafterweise eine verbesserte Netzzustandsabschätzung (englisch: Distribution System State Estimator) durchgeführt werden.

Es ist somit vorteilhaft, wenn die Netzregeleinheit unter Berücksichtigung der Fehlermeldung und/oder weiterer durch die Überwachungseinheit übermittelter Daten eine Netzzustandsschätzung durchführt.

Durch die Netzzustandsschätzung kann vorteilhafterweise eine mögliche Verletzung des Spannungsbandes an ungemessenen Netzanschlusspunkten erkannt und dem Verteilnetzbetreiber zur Verfügung gestellt werden.

Weiterhin kann der Schaltzustand des Stromnetzes abgeschätzt werden, der in der Niederspannung typischerweise nicht bekannt ist, da die Schalter telemetrisch nicht an ein Leitsystem, beispielsweise an die Netzregeleinheit, angebunden sind und typischerweise manuell geschaltet wird. Dies kann auch bei der Fehlerlokalisation und/oder Fehlerbehebung unterstützen.

Gemäß einer vorteilhaften Ausgestaltung der Erfindung wird die Fehlermeldung durch die Überwachungseinheit an eine lokale Energiemarktplattform übermittelt, wobei die lokale Energiemarktplattform die Fehlermeldung an die Netzregeleinheit weiterleitet.

Das ist deshalb von Vorteil, da dadurch eine bereits bestehende Infrastruktur zur Fehlererkennung verwendet wird. Das ist deshalb möglich, da lokale Energiemarktplattformen typischerweise bereits eine Datenschnittstelle zur Netzregeleinheit aufweisen.

Bevorzugt werden ebenfalls die weiteren Daten über die lokale Energiemarktplattform an die Netzregeleinheit weitergeleitet.

Hierbei können diese zusätzlich für eine Netzplanung bei einer Fragestellung zur technischen Machbarkeit bei Installationen von Neuanlagen, Photovoltaikanalagen oder Ladestationen von Elektrofahrzeugen, verwendet werden. Weiterhin können für eine mittel- und langfristige Netzplanung die erfassten und gegebenenfalls gespeicherten Daten bei der technischen Fragestellung unterstützen, ob und an welcher Stelle eine Erweiterung der Netzbetriebsmittel erforderlich ist.

In einer vorteilhaften Weiterbildung der Erfindung bildet die Überwachungseinheit eine Komponente einer Handelsagenteinheit aus, wobei die Handelsagenteinheit dazu ausgebildet ist, Angebote und/oder Gebote bezüglich eines Energieaustauschs über das Stromnetz zu bestimmen und diese sowie die Fehlermeldung an die lokale Energiemarktplattform zu übermitteln.

Mit anderen Worten wird vorteilhafterweise die Handelsagenteinheit beziehungsweise der Handelsagent des lokalen Energiemarktes als Überwachungseinheit verwendet. Hierbei wird die Fehlermeldung zunächst durch den Handelsagenten an die lokale Energiemarktplattform übermittelt. Die lokale Energiemarktplattform leitet anschließend die Fehlermeldung an die Netzregeleinheit weiter. Dadurch wird vorteilhafterweise die für den lokalen Energiemarkt bereits bestehende Infrastruktur zur Fehlererkennung verwendet.

Gemäß einer vorteilhaften Ausgestaltung der Erfindung ist das Stromnetz als Mittelspannungsnetz oder Niederspannungsnetz ausgebildet.

Das ist deshalb von Vorteil, da typischerweise für die genannten Stromnetze keine Sensoren beziehungsweise Messeinrichtungen zur Verfügung stehen.

Gemäß einer bevorzugten Ausgestaltung der vorliegenden Erfindung können jedoch die Messeinrichtungen, Module, Handelsagenten, etc. eines lokalen Energiemarktes, der eine Datenschnittstelle zur Netzregeleinheit aufweist, zur Fehlererkennung verwendet werden.

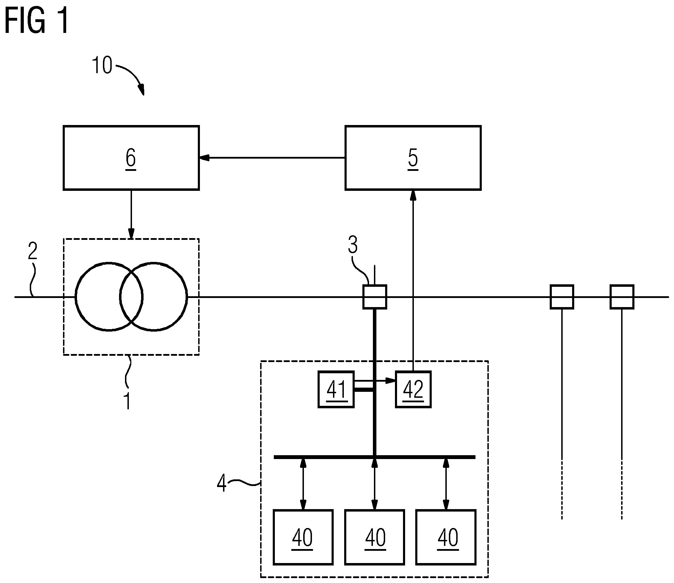

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein System gemäß einer bevorzugten Ausgestaltung der vorliegenden Erfindung.

Gleichartige, gleichwertige oder gleichwirkende Elemente können in der Figur mit denselben Bezugszeichen versehen sein.

Die Figur zeigt ein System 10, welches mehrere Energiesysteme 4 umfasst, die an ein gemeinsames Stromnetz 2, insbesondere ein Niederspannungsnetz, über einen jeweiligen Netzanschlusspunkt 3 angeschlossen sind. Aus Übersichtsgründen ist lediglich eines der Energiesysteme 4 dargestellt. Die Energiesysteme weisen typischerweise mehrere energietechnische Anlagen 40 auf.

Das Stromnetz 2 weist wenigstens einen regelbaren Ortnetztransformator 1 auf, über welchen die Energiesysteme 4 an ein Netz höherer Spannung angebunden sind.

Weiterhin umfasst das System 10 eine lokale Energiemarktplattform 5 sowie eine Netzregeleinheit 6.

Die lokale Energiemarktplattform 5 ermöglicht einen lokalen Energieaustausch zwischen den Energiesystemen 4 und weist, durch einen Pfeil angedeutet, eine Datenschnittstelle zur Netzregeleinheit 6 auf. Mittels ihrer Datenschnittstelle kann die lokale Energiemarktplattform 5 Daten/Informationen an die Netzregeleinheit 6 übermitteln beziehungsweise mit dieser austauschen.

Die Netzregeleinheit 6 ist zur Regelung des Stromnetzes 2 ausgebildet, beispielsweise durch ein Regeln des Ortsnetztransformators 1. Hierzu kann die Netzregeleinheit 6 ein Steuersignal beziehungsweise Sollwerte für die lokale Regelung des Ortnetztransformators 1 vorgeben. Dies ist durch von der Netzregeleinheit 6 zum Transformator 1 gerichteten Pfeil gekennzeichnet.

Die Energiesysteme 4 beziehungsweise das System 10 umfasst weiterhin eine Messeinrichtung 41 sowie eine Überwachungseinheit 42. Die Überwachungseinheit 42 ist als Handelsagenteinheit des lokalen Energiemarktes 5 ausgebildet. Mit anderen Worten bildet die Überwachungseinheit 42 bereits die Datenschnittstelle des Energiesystems 4 zum lokalen Energiemarkt 5 aus.

Der Handelsagent 42 beziehungsweise die Überwachungseinheit 42 ist dazu ausgebildet, Daten/Informationen mit der lokalen Energiemarktplattform 5 auszutauschen. Dieser Datenaustausch ist durch einen Pfeil von der Überwachungseinheit 42 zur lokalen Energiemarktplattform 5 gekennzeichnet. Mit anderen Worten ist das Energiesystem 4 bereits in einen lokalen Energiemarkt integriert beziehungsweise ist Teilnehmer des lokalen Energiemarktes 5. Für diese Teilnahme weist das Energiesystem 4 somit bereits die hierzu erforderlichen Komponenten auf, nämlich die Messeinrichtung 41 sowie die Handelsagenteneinheit 42.

Typischerweise dient der Handelsagent 42 im Rahmen des lokalen Energiemarktes 5 lediglich dazu, Angebote und/oder Gebote für Energieaustausche zu bestimmen und an die lokale Energiemarktplattform 5 zu übermitteln. Vorliegend bildet der Handelsagent 42 zusätzlich die technische Überwachungseinheit 42 aus, die dazu ausgebildet ist, die Spannung beziehungsweise deren Messwerte, die die Messeinrichtung 41 erfasst, zu analysieren und somit einen Fehler beziehungsweise ein Fehlverhalten des Ortsnetztransformators 1 zu erkennen.

Gemäß dem vorliegenden Ausführungsbeispiel wird die bereits vorhandene Datenschnittstelle des Handelsagenten 42 mit der lokalen Energiemarktplattform 5 und die vorhandene Datenschnittstelle der lokalen Energiemarktplattform 5 mit der Netzregeleinheit 6 dazu verwendet, eine Fehlermeldung an die Netzregeleinheit 6 dann zu übermitteln, wenn innerhalb eines festgelegten Zeitbereiches eine zeitliche Unregelmäßigkeit von Spannungssprüngen oberhalb eines festgelegten Schwellenwertes durch die Überwachungseinheit 42 festgestellt wird. Hierzu erfasst die Messeinrichtung 41 einen oder mehrere Messwerte der Spannung jeder Phase des Stromnetzes 2 und übermittelt diese an die Überwachungseinheit 42 beziehungsweise an den Handelsagenten 42.

Die vorliegende Ausgestaltung der Erfindung ermöglicht es somit einen Fehler beziehungsweise ein Fehlverhalten des Ortsnetztransformators 1 zu erkennen und die aufgrund der Teilnahme des Energiesystems 4 am lokalen Energiemarkt 5 bereits vorhandenen Komponenten, für die Fehlererkennung sowie für eine entsprechende Fehlermitteilung (Fehlermeldung) an die Netzregeleinheit 6 zu verwenden. Dadurch können Ressourcen sowie ein redundanter Netzausbau vermieden werden.

Aufgrund der über die lokale Energiemarktplattform 5 an die Netzregeleinheit 6 übermittelten Fehlermeldung kann diese Maßnahmen zur Fehlerbehebung ergreifen beziehungsweise initiieren. Beispielsweise entsprechende Sollwerte beziehungsweise Steuersignale an den regelbaren Ortsnetztransformator 1 übermitteln und/oder eine Reparatur und/oder Wartung veranlassen.

Durch die technische weitere Ausbildung des Handelsagenten 42 als Überwachungseinheit 42 kann somit eine Fehlererkennung bezüglich des Ortsnetztransformators 1 erfolgen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Ortsnetztransformator
- 2: Stromnetz
- 3: Netzanschlusspunkt
- 4: Energiesystem
- 5: Energiemarktplattform
- 6: Netzregeleinheit
- 10: System
- 40: Anlagen
- 41: Messeinrichtung
- 42: Überwachungseinheit

## Patentansprüche

1. Verfahren zur Fehlererkennung eines regelbaren Ortsnetztransformators (1), wobei ein oder mehrere Energiesysteme (4) am Ortsnetztransformator (1) über ein dreiphasiges Stromnetz (2) angeschlossen sind, und jedes der Energiesysteme (4) eine Messeinrichtung (41) zur Erfassung der Spannung jeder Phase sowie eine Überwachungseinheit (42) zur Auswertung der erfassten Spannungen umfasst, **gekennzeichnet durch** die folgenden Schritte:
- Erfassen der Spannung für jede der Phasen mittels der Messeinrichtung (41);
- Übermitteln der erfassten Spannungen an die Überwachungseinheit (42);
- Übermitteln einer Fehlermeldung bezüglich des Ortnetztransformators (1) an eine Netzregeleinheit (6) des Stromnetzes (2) durch die Überwachungseinheit (42), wenn innerhalb eines festgelegten Zeitbereiches eine zeitliche Unregelmäßigkeit von Spannungssprüngen oberhalb eines festgelegten Schwellenwertes durch die Überwachungseinheit (42) festgestellt wird.

2. Verfahren gemäß Anspruch 1, **gekennzeichnet dadurch, dass** die Fehlermeldung durch die Überwachungseinheit (42) an die Netzregeleinheit (6) übermittelt wird, wenn eine zeitliche Häufung der Spannungssprünge durch die Überwachungseinheit (42) festgestellt wird.

3. Verfahren gemäß Anspruch 1 oder 2, **gekennzeichnet dadurch, dass** die Fehlermeldung durch die Überwachungseinheit (42) an die Netzregeleinheit (6) übermittelt wird, wenn eine invertierte Wirkrichtung von Spannungssprüngen durch die Überwachungseinheit (42) festgestellt wird.

4. Verfahren gemäß einem der vorhergehenden Ansprüche, **gekennzeichnet dadurch, dass** das Übermitteln der Fehlermeldung nur dann erfolgt, wenn zusätzlich ein zulässiges Spannungsband durch die erfassten Spannungen verletzt ist.

5. Verfahren gemäß Anspruch 4, **gekennzeichnet dadurch, dass** das zulässige Spannungsband durch den Spannungsbereich von 207 Volt bis 253 Volt festgelegt ist.

6. Verfahren gemäß einem der vorhergehenden Ansprüche, **gekennzeichnet dadurch, dass** zusätzlich eine Fehlerbeschreibung bezüglich der Fehlermeldung durch die Überwachungseinheit (42) an die Netzregeleinheit (6) übermittelt wird.

7. Verfahren gemäß einem der vorhergehenden Ansprüche, **gekennzeichnet dadurch, dass** basierend auf der Fehlermeldung eine Reparatur und/oder eine Wartung des Ortsnetztransformators (1) durchgeführt wird.

8. Verfahren gemäß einem der vorhergehenden Ansprüche, **gekennzeichnet dadurch, dass** die Messeinrichtung (41) weiterhin zur Erfassung der Wirkleistung und/oder Blindleistung jeder Phase ausgebildet ist.

9. Verfahren gemäß Anspruch 8, **gekennzeichnet dadurch, dass** die Überwachungseinheit (42) die erfassten Wirkleistungen und/oder Blindleistungen an die Netzregeleinheit (6) übermittelt.

10. Verfahren gemäß einem der vorhergehenden Ansprüche, **gekennzeichnet dadurch, dass** die Netzregeleinheit (6) unter Berücksichtigung der Fehlermeldung und/oder weiterer durch die Überwachungseinheit (42) übermittelter Daten eine Netzzustandsschätzung durchführt.

11. Verfahren gemäß einem der vorhergehenden Ansprüche, **gekennzeichnet dadurch, dass** die Fehlermeldung durch die Überwachungseinheit (42) an eine lokale Energiemarktplattform (5) übermittelt wird, wobei die lokale Energiemarktplattform (5) die Fehlermeldung an die Netzregeleinheit (6) weiterleitet.

12. Verfahren gemäß Anspruch 11, **gekennzeichnet dadurch, dass** die Überwachungseinheit (42) eine Komponente einer Handelsagenteinheit ausbildet, wobei die Handelsagenteinheit dazu ausgebildet ist, Angebote und/oder Gebote bezüglich eines Energieaustauschs über das Stromnetz (2) zu bestimmen und diese sowie die Fehlermeldung an die lokale Energiemarktplattform (5) zu übermitteln.

13. System (10) zur Fehlererkennung eines regelbaren Ortsnetztransformators (1), welches ein oder mehrere am Ortsnetztransformator (1) über ein dreiphasiges Stromnetz (2) angeschlossene Energiesysteme (4) umfasst, wobei jedes der Energiesysteme (4) eine Messeinrichtung (41) zur Erfassung der Spannung jeder Phase sowie eine Überwachungseinheit (42) zur Auswertung der erfassten Spannungen umfasst, **dadurch gekennzeichnet, dass**:
- die Messeinrichtung (41) zur Erfassung der Spannung für jede der Phasen ausgebildet ist;
- die Messeinrichtung (41) zur Übermittlung der erfassten Spannungen an die Überwachungseinheit (42) ausgebildet ist; und
- die Überwachungseinheit (42) dazu ausgebildet ist, eine Fehlermeldung bezüglich des Ortnetztransformators (1) an eine Netzregeleinheit (6) des Stromnetzes (2) zu übermitteln, wenn innerhalb eines festgelegten Zeitbereiches eine zeitliche Unregelmäßigkeit von Spannungssprüngen oberhalb eines Schwellenwertes durch die Überwachungseinheit (42) festgestellt wird.

14. System (10) gemäß Anspruch 13, **dadurch gekennzeichnet, dass** das Stromnetz (2) als Mittelspannungsnetz oder Niederspannungsnetz ausgebildet ist.
